# EUROPÄISCHE PATENTSCHRIFT

(11) **EP 1 484 295 B1**
(45) Veröffentlichungstag und Bekanntmachung des Hinweises auf die Patenterteilung: **05.03.2008**
(21) Anmeldenummer: 03405395.9
(22) Anmeldetag: 03.06.2003
(51) Int. Cl.: C04B 30/02, C04B 18/24, E01C 5/00

(54) **Pflästerung in ungebundener Bauweise**
Non-bonded paving
Pavage non-liée

(43) Veröffentlichungstag der Anmeldung: 08.12.2004
(73) Patentinhaber: Lingg, Andreas, 3043 Uettligen (CH)
(72) Erfinder: Lingg, Andreas, 3043 Uettligen (CH)
(74) Vertreter: Roshardt, Werner Alfred

(56) Entgegenhaltungen:
- EP-A- 0 401 674
- DE-A- 3 106 370
- DE-C- 651 835
- DE-C- 809 405
- GB-A- 2 117 753
- US-A- 4 369 054
- US-A1- 2002 117 771

## Beschreibung

### Technisches Gebiet

Die Erfindung betrifft eine Pflästerung in ungebundener Bauweise, mit einem Fugenverfüllmaterial und ein Verfahren zum Verfüllen von Fugen einer ungebundenen Pflästerung mit Pflastersteinen aus Natur- oder Kunststein unter Verwendung des Fugenverfüllmaterials.

### Stand der Technik

Pflästerungen, d. h. auf einem Unterbau wie z. B. einem Kiesbett eng gesetzte Pflastersteine aus Natur- oder Kunststein, kommen heute besonders in historischen Zentren als Strassendecke zum Einsatz. Eine weitere Anwendung erfahren sie beim Bau von Plätzen. In beiden Fällen ist besonders der optische Aspekt einer gepflästerten Fläche (im Gegensatz z. B. zu einer asphaltierten Fläche) wichtig. Oft sind bei der Wahl einer Pflästerung auch denkmalpflegerische Überlegungen entscheidend.

Früher erfolgte die Pflästerung, indem zwischen die auf den Unterbau gesetzten Pflastersteine Sand eingefüllt wurde. Dieser füllte die Fugen zwischen den Steinen aus, stabilisierte dadurch die Strassendecke und verminderte die Auswaschung des Unterbaus, z. B. bei starkem Regenfall. Problematisch ist, dass der Sand bei Regen oder Wind und besonders bei der Strassenreinigung aus den Fugen entfernt wird und periodisch nachgefüllt werden muss. Zudem erschwert der aus den Fugen verfrachtete Sand die Strassenreinigung und lagert sich weitherum ab, was allgemein zu einem höheren Reinigungsaufwand führt.

Aus der DE 651 835 (Leopold Wieschmann) ist bekannt, einen Mörtel für Strassendecken aus Pflastersteinen herzustellen, indem gesiebtem Splittsand und Gesteinsstaub Cellulosestaub oder -rückstände zusammen mit einem Lösungsmittel, wie z. B. Aceton, beigegeben werden. Die gelöste Cellulose wirkt als Bindemittel, so dass die Mörtelmasse an den Pflastersteinen haftet. Dies führt zu einer längeren Lebensdauer der Strassendecke. Allerdings wird die mit einem derartigen Mörtel hergestellte Pflästerung nach Fertigstellung trotzdem noch gesandet. Die oben genannten Probleme werden durch den Mörtel also nicht gelöst.

Die EP 0 401 674 (Henkel) beschreibt die Verwendung von säurehärtenden Amino-Harzen als organische Bindemittel in mechanisch hochbelastbaren Fugenfüllmassen auf der Basis von z. B. Sand. Der resultierende Mörtel kann zur Verfugung von Pflastersteinen eingesetzt werden, wobei diese haftfest miteinander verbunden werden. Die organischen Bindemittel können zur Behandlung bereits bestehender, sandverfugter Pflästerungen auch direkt in die bereits sandverfüllten Fugen eingebracht werden. Nach dem Aushärten der Bindemittel erhält man auch auf diese Weise eine mechanisch hoch belastbare Pflästerung.

Aufgrund der gebundenen Bauweise ergeben sich Drainage-Probleme, indem das Oberflächenwasser nicht mehr zwischen den Pflastersteinen abfliessen und versickern kann. Auch Gase, welche unterhalb der Pflasterdecke entstehen, können nicht nach oben entweichen. Pflästerungen in gebundener Bauweise unterscheiden sich zudem optisch stark von herkömmlichen, ungebundenen Pflästerungen, indem sich der gefestigte Mörtel mit seiner vergleichsweise dichten Oberfläche und seiner in der Regel dunklen Farbe deutlich von eingefülltem Sand unterscheidet. Schliesslich bewirken Temperaturwechsel und mechanische Belastungen mit der Zeit Risse in gebundenen Fugenmörteln. Eisbildung in den entstandenen Rissen führt zur Absprengung von Teilen des Fugenmörtels.

Die GB 2 117 753 offenbart ein Baumaterial mit einem festen Füllmaterial, Cellulosefasern und optional einem zementartigen Bindemittel. Das Material eignet sich für eine Vielzahl verschiedenartigster Anwendungen, so zur Herstellung von Isolier- oder Bauelementen, Bausteinen, Pflastersteinen oder -platten, Innen- oder Aussenverputz, Deckenplatten, Wand- und Dachverkleidungen, Füllungen von Brandschutztüren, Modellierton, Gartenmöbeln, Verschalungen von Tanks, Fugenmörtel oder Füllstoff, Rohren, Rohrverkleidungen etc. Beim festen Füllmaterial handelt es sich bevorzugt um pulverisierte Flugasche (PFA), eingesetzt werden kann aber auch z. B. Meersand. Generell ist das Baumaterial aus 5 - 90 Vol.% des Füllmaterials, 10 - 95 Vol.% Cellulosefasern, 0 - 90 Vol.% Bindemittel und 0 - 10 Vol.% Emulgierungsmittel zusammengesetzt. Bindemittelfreie Baumaterialien mit PFA sind zur Anwendung bei der Herstellung von Isolationsplatten und -flocken, für Modellierton, als Füllmittel für Wand- und Dachzwischenräume sowie als Pflanzenerde offenbart.

Eine Anwendung als Fugenverfüllmaterial für ungebundene Pflästerungen ist nicht angesprochen. Entsprechend fehlen auch Hinweise, wie aus der Vielzahl der beschriebenen Materialien ein für diese Anwendung geeignetes Material auszuwählen ist.

### Darstellung der Erfindung

Aufgabe der Erfindung ist es, eine dem eingangs genannten technischen Gebiet zugehörende Pflästerung zu schaffen, deren Fugenverfüllmaterial durch ein Baumaterial gebildet wird, welches bei der Strassenreinigung, bei Regen und Wind in den Fugen verbleibt, den Abfluss von Oberflächenwasser durch die Fugen erlaubt, einfach zu verarbeiten ist und optisch herkömmlichem Sand nahe kommt.

Die Lösung der Aufgabe ist durch die Merkmale des Anspruchs 1 definiert. Gemäss der Erfindung ist das Baumaterial bindemittelfrei, besteht im Wesentlichen aus Sand mit einer Korngrösse von 0-8 mm und aus Faserstoffen, wobei ein Anteil an Sand 85 - 99.5 Gew.%, bevorzugt 94 - 96.5 Gew.% und ein Anteil an Faserstoffen 0.5 - 15 Gew.%, bevorzugt 3.5 - 6 Gew.% beträgt.

Das Baumaterial ist bindemittelfrei, enthält also keine zusätzlichen Bindemittel wie z. B. Zement, Kalk, Kunstharz, Wasserglas, Bitumen. Die Faserstoffe führen mechanisch zu einem stärkeren Zusammenhalt des Baumaterials. Es findet aber kein Binden des Baumaterials statt. Sobald das Baumaterial angefeuchtet wird, wird es nämlich wieder zähflüssig und wasserdurchlässig und erlaubt so das Versickern von Oberflächenwasser. Gleichzeitig werden allfällig entstandene Unebenheiten des Fugenverfüllmaterials ausgeglichen. Durch den verstärkten Zusammenhalt wird die Entfernung des Baumaterials aus den Pflasterfugen bei der Strassenreinigung oder aufgrund von Witterungseinflüssen minimiert. Ausserdem ist das Baumaterial optisch gewöhnlichem Sand sehr ähnlich.

Im Weiteren ist das Material einfach zu verarbeiten: In trockenem Zustand ist es rieselfähig und einfach zu transportieren und zu dosieren. Es wird mit Wasser angerührt, so dass sich temporär eine mörtelartige Masse bildet, welche mit Besen oder Schabern auf der Pflästerung verteilt und schliesslich mit einer Vibrationsplatte in die Fugen eingearbeitet werden kann. Selbst wenn das angerührte Material einmal eintrocknen sollte, kann es mittels Zugabe von Wasser immer wieder in einen verarbeitungsfähigen Zustand gebracht werden.

Die Mengenangaben beziehen sich auf den Sand und die Faserstoffe in trockenem Zustand. Die genannte Zusammensetzung gewährleistet einen guten Zusammenhalt des Baumaterials mit einem Minimum an Faserstoffen, so dass sich das Material optisch nicht zu stark von Sand unterscheidet und einfach, ähnlich wie Sand, verarbeitbar ist.

Mit Vorteil sind die Faserstoffe aus den folgenden ausgewählt:
a) Fasermaterial pflanzlicher Art mit Füllstoffen, insbesondere gewonnen aus der Altpapierverwertung;
b) Cellulose-Holzschliff;
c) Zellstoffe pflanzlicher Art;
d) synthetische Fasern;
e) Kartonrohmaterial;
f) Papierrohmaterial.

Anlässlich der Verwertung von Altpapier fällt ein pflanzliches Fasermaterial an, welches besonders gut zur Herstellung des erfindungsgemässen Baumaterials geeignet ist. Das Fasermaterial enthält als Reststoffe aus der Papierherstellung diverse Füllstoffe, welche den Zusammenhalt zwischen Fasermaterial und Sand noch verbessern können. Cellulose-Holzschliff fällt bei der Holzverarbeitung als Abfallprodukt an und ist entsprechend kostengünstig. Weitere Zellstoffe pflanzlicher Art, wie z. B. Hanf- oder Jutefasern, sind ebenfalls verfügbar und für die Herstellung des erfindungsgemässen Baumaterials geeignet. Wahlweise können synthetische Fasern eingesetzt werden, einerseits mineralische wie Glas- oder Mineralfasern und andererseits auch organische wie Polyamid-, Polyester-, Polyurethan, Carbon- oder Keramikfasern. Schliesslich eignet sich sowohl Papierrohmaterial als auch Kartonrohmaterial als Faserstoff für das erfindungsgemässe Baumaterial. Es ist beispielsweise Kartonrohmaterial verfügbar, welches lebensmittelecht ist. Dadurch wird eine gesundheitliche Gefährdung von Personen durch das Baumaterial ausgeschlossen, eine allfällig vorgeschriebene, aufwändige Unbedenklichkeitsprüfung kann somit vermieden oder beschleunigt werden.

Bei einer erfindungsgemässen Pflästerung mit Pflastersteinen aus Natur- oder Kunststein sind die Fugen mit einem Baumaterial wie oben beschrieben verfüllt. Eine derartige Pflästerung erfordert kein Nachfüllen von Sand, weil das Baumaterial bei der Strassenreinigung oder durch Wettereinflüsse nicht aus den Fugen entfernt wird. Trotzdem sind die Fugen wasser- und gasdurchlässig und erlauben sowohl das Versickern von Oberflächenwasser als auch das Austreten von unterhalb der Pflasterdecke entstehenden Gasen. Schliesslich ist die Pflästerung optisch einer herkömmlichen, mit Sand verfüllten, ungebundenen Pflästerung sehr ähnlich.

Das Baumaterial ist als oberste Schicht in die Fugen zwischen die Pflastersteine eingebracht. Das Material bildet somit gleichsam einen Deckel, welcher darunter liegende Materialien schützt. Es bestimmt überdies zusammen mit den Stirnseiten der Pflastersteine das optische Bild der Pflästerung.

Zusätzlich kann das Baumaterial auch in tieferen Schichten der Pflästerung eingesetzt werden, z. B. damit ein Splittbett mit stärkerem Zusammenhalt gebildet werden kann.

Bevorzugt ist in die Fugen eine untere Schicht aus Sand unterhalb der obersten Schicht eingebracht. Dies ermöglicht eine Verringerung der benötigten Menge des erfindungsgemässen Baumaterials. Trotzdem werden die erfindungsgemässen Vorteile erreicht, denn der unter der obersten Schicht aus dem erfindungsgemässen Baumaterial liegende Sand ist durch den Deckel vor mechanischer Entfernung sowie vor Auswaschen geschützt. Vorzugsweise beträgt die Dicke der obersten Schicht 2-4 cm. Dadurch ist die Schicht genügend dick, um auch grossen Beanspruchungen standhalten zu können. Zusätzlich weist die Schicht auch dann eine genügende Dicke auf, wenn im untersten Bereich der Schicht des erfindungsgemässen Baumaterials eine gewisse "Verdünnung" durch Sand der unteren Schicht stattfindet.

Alternativ können die Fugen in ihrer gesamten Tiefe durch das erfindungsgemässe Material ausgefüllt werden.

Mit Vorteil wird das Baumaterial zum Verfüllen von Fugen einer ungebundenen Pflästerung mit Pflastersteinen aus Natur- oder Kunststein eingesetzt.

Alternativ eignet sich das Baumaterial auch als ungebundener Belag für eine Fläche, wie z. B. einen Weg oder einen Platz. Das Material wird beispielsweise anstelle von Sand eingesetzt. Durch den gegenüber reinem Sand verstärkten Zusammenhalt des Baumaterials wird eine Verfrachtung des Belags bei Wind sowie eine Auswaschung bei Regen verhindert oder zumindest stark vermindert. Trotzdem bleibt die Entwässerung der Fläche gewährleistet.

Das Baumaterial ist im Weiteren auch für andere Anwendungen als Ersatz für Sand verwendbar, bei welchen nicht erwünscht ist, dass der Sand durch den Wind verfrachtet oder durch Regenwasser ausgewaschen wird.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendete Zeichnung zeigt:

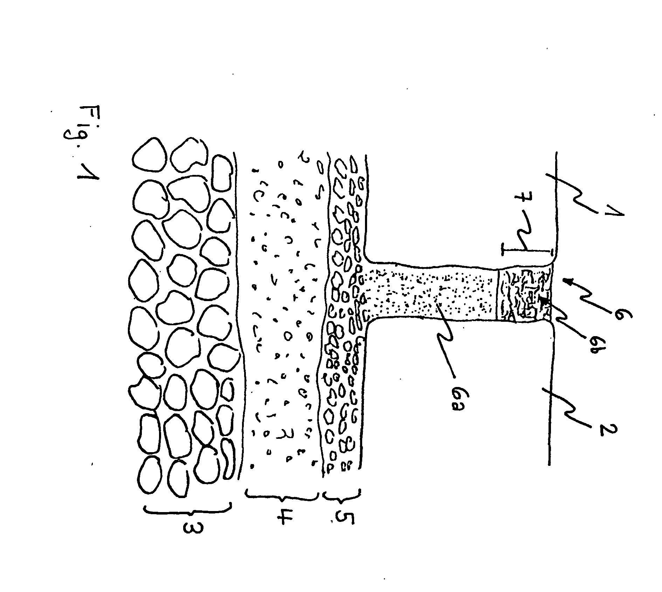

- Fig. 1: eine schematische Darstellung des Aufbaus einer Pflästerung mit dem erfindungsgemässen Baumaterial.

### Wege zur Ausführung der Erfindung

Die Figur 1 ist eine schematische Darstellung des Aufbaus einer Pflästerung mit dem erfindungsgemässen Baumaterial im Querschnitt. Die Pflastersteine 1, 2 aus Naturstein sind auf einem Bett gesetzt, welches von unten nach oben drei Schichten 3, 4, 5 aufweist. Die unterste Schicht 3 ist ein Kiesbett, darauf folgen die Schicht 4 aus Sickerbeton und die Schicht 5 aus kalkarmem Splitt. Durch die Verwendung von kalkarmem Splitt wird der Abfluss des Oberflächenwassers nicht durch Kalkabscheidungen aus der Schicht 5 behindert. Zwischen den zwei benachbarten Pflastersteinen 1, 2 ist eine Fuge 6 ausgespart. Diese ist in einem unteren Bereich 6a mit Sand ausgefüllt. In einem oberen Bereich 6b ist ein erfindungsgemässes Material aus ca. 95 % trockenem Sand und ca. 5 % trockenem Fasermaterial pflanzlicher Art mit Füllstoffen, gewonnen aus der Altpapierverwertung, eingefüllt. Diese obere Schicht weist eine Schichtdicke 7 von ca. 3 cm auf.

Die Herstellung der dargestellten Pflästerung erfolgt grösstenteils gleich wie bei herkömmlichen Pflästerungen in ungebundener Bauweise. So ergeben sich gegenüber bekannten Verfahren weder Änderungen beim Aufbauen des Betts 3, 4, 5 noch beim Setzen der Pflastersteine 1, 2. In die Fugen 6 wird zudem in einem ersten Schritt ebenfalls Sand eingefüllt, allerdings eine geringere Menge, so dass ein oberer Bereich 6b der Fuge 6 vorerst unverfüllt bleibt. Der Sand kann nach dem Einfüllen mit einer Vibrationsplatte weiter in die Fugen eingearbeitet werden, so dass er den unteren Bereich der Fugen dicht ausfüllt.

Das erfindungsgemässe Baumaterial kann verwendungsfertig als Mischung von trockenem Sand und trockenem Fasermaterial geliefert werden oder direkt beim Anwendungsort, z. B. mittels einer üblichen Beton- oder Zementmischmaschine, gemischt werden. Im letzten Fall ist es vorteilhaft, zuerst den Sand, vorzugsweise Brechsand mit einer Korngrösse von bis zu 3 mm, mit Wasser anzurühren und nachfolgend das Fasermaterial in der gewünschten Menge einzurühren. Dadurch wird eine Staubentwicklung weitgehend vermieden. Wurde das Baumaterial verwendungsfertig geliefert oder wird es am Bauplatz trocken gemischt, muss es lediglich noch mit Wasser angerührt werden, wobei das Verhältnis zwischen Baumaterial und Wasser wenig kritisch ist und so gewählt wird, dass die entstehende Masse leicht verarbeitet werden kann.

Wichtig ist sowohl bei der industriellen Herstellung des Baumaterials als auch beim Mischen am Bauplatz, dass der Sand und das Fasermaterial möglichst homogen gemischt werden. Dies bewirkt einen gleichmässigen Zusammenhalt des Materials und ein gleichmässiges optisches Bild.

Die fertig mit Wasser angerührte Masse wird dann auf die Pflästerung gegeben und mittels Schabern, Besen oder Bürsten in die Pflasterfugen eingearbeitet, also eingeschlämmt oder eingefegt. Nachdem das Material weitgehend ausgetrocknet und ein grosser Teil des enthaltenen Wassers verdunstet ist, ist die Pflästerung fertiggestellt. Die Pflasterfugen unterscheiden sich optisch kaum von herkömmlichen, mit Sand gefüllten Fugen, sind aber weit dauerhafter.

In ähnlicher Weise lassen sich bestehende Pflästerungen in ungebundener Bauweise mit dem erfindungsgemässen Fugenverfüllmaterial versehen. Dazu wird der Sand bzw. eine oberste Schicht des Sandes aus den Fugen entfernt und anschliessend das erfindungsgemässe Baumaterial, wie oben beschrieben, eingebracht. Der Aufwand zur Verbesserung der Pflästerung ist also minimal.

Alternativ kann das Material in trockener Form mit Schabern oder Bürsten in die Fugen eingearbeitet werden. Wie beim Einfüllen von Sand empfiehlt sich auch hier eine Nachbearbeitung mit einer Vibrationsplatte. Weiter ist auch ein Wässern des eingebrachten Materials von Vorteil, so dass der Zusammenhalt zwischen Sand und Faserstoffen in der Fuge erreicht wird.

Zusammenfassend ist festzustellen, dass die Erfindung eine Pflästerung in ungebundener Bauweise zur Verfügung stellt, deren Fugenverfüllmaterial bei der Strassenreinigung, bei Regen und Wind in den Fugen verbleibt, den Abfluss von Oberflächenwasser durch die Fugen erlaubt, einfach zu verarbeiten ist und optisch herkömmlichem Sand nahe kommt.

## Patentansprüche

1. Pflästerung mit Pflastersteinen (1, 2) aus Natur- oder Kunststein, wobei die Fugen (6) mit einem Baumaterial verfüllt sind, welches bindemittelfrei ist und im Wesentlichen aus Sand mit einer Korngrösse von 0-8 mm und Faserstoffen besteht und wobei das Baumaterial eine oberste Schicht (6b) zwischen den Pflastersteinen (1, 2) bildet.

2. Pflästerung nach Anspruch 1, **dadurch gekennzeichnet, dass** unterhalb der obersten Schicht (6b) eine untere Schicht (6a) aus Sand eingebracht ist und dass die oberste Schicht (6b) eine Dicke von 2-4 cm aufweist.

3. Pflästerung nach Anspruch 1 oder 2, **dadurch gekennzeichnet, dass** das Baumaterial einen Anteil an Sand von 85-99.5 Gew.%, bevorzugt 94-96.5 Gew.% und einen Anteil an Faserstoffen von 0.5-15 Gew.%, bevorzugt 3.5-6 Gew.% aufweist.

4. Pflästerung nach Anspruch 3, **dadurch gekennzeichnet, dass** die Faserstoffe aus den folgenden ausgewählt sind:
a) Fasermaterial pflanzlicher Art mit Füllstoffen, insbesondere gewonnen aus der Altpapierverwertung;
b) Cellulose-Holzschliff;
c) Zellstoffe pflanzlicher Art;
d) synthetische Fasern;
e) Kartonrohmaterial;
f) Papierrohmaterial.

5. Verfahren zum Verfüllen von Fugen (6) einer ungebundenen Pflästerung mit Pflastersteinen (1,2) aus Natur- oder Kunststein unter Verwendung eines Baumaterials, welches bindemittelfrei ist und im Wesentlichen aus Sand mit einer Korngrösse von 0-8 mm und Faserstoffen besteht, wobei das Baumaterial als oberste Schicht (6b) in die Fugen (6) zwischen den Pflastersteinen (1, 2) eingebracht wird.

6. Verfahren nach Anspruch 5, **dadurch gekennzeichnet, dass** in die Fugen (6) eine untere Schicht (6a) aus Sand unterhalb der obersten Schicht (6b) eingebracht wird.

7. Verfahren nach Anspruch 6, **dadurch gekennzeichnet, dass** die oberste Schicht (6b) eine Dicke (7) von 2-4 cm aufweist.

8. Verfahren nach einem der Ansprüche 5 bis 7, **dadurch gekennzeichnet, dass** das Baumaterial einen Anteil an Sand von 85-99.5 Gew.%, bevorzugt 94-96.5 Gew.% und einen Anteil an Faserstoffen von 0.5-15 Gew.%, bevorzugt 3.5-6 Gew.% aufweist.

9. Verfahren nach Anspruch 8, **dadurch gekennzeichnet, dass** die Faserstoffe aus den folgenden ausgewählt sind:
a) Fasermaterial pflanzlicher Art mit Füllstoffen, insbesondere gewonnen aus der Altpapierverwertung;
b) Cellulose-Holzschliff;
c) Zellstoffe pflanzlicher Art;
d) synthetische Fasern;
e) Kartonrohmaterial;
f) Papierrohmaterial.

## Claims

1. Paving with paving stones (1, 2) of natural or artificial stone, wherein the joints (6) are filled with a building material which is binder-free and consists substantially of sand with a grain size of 0-8 mm and fibrous substances, and wherein the building material forms a top layer (6b) between the paving stones (1, 2).

2. Paving according to Claim 1, **characterised in that** a lower layer (6a) of sand is introduced below the top layer (6b), and that the top layer is of a thickness of 2-4 cm.

3. Paving according to Claim 1 or 2, **characterised in that** the building material has a proportion of sand of 85-99.5 wt.%, preferably 94-96.5 wt.%, and a proportion of fibrous substances of 0.5-15 wt.%, preferably 3.5-6 wt.%.

4. Paving according to Claim 3, **characterised in that** the fibrous substances are selected from the following:
a) fibrous material of the vegetable type with fillers, in particular obtained from waste paper recycling;
b) cellulosic wood pulp;
c) pulp of the vegetable type;
d) synthetic fibres;
e) board raw material;
f) paper raw material.

5. Method for filling joints (6) of non-bonded paving with paving stones (1, 2) of natural or artificial stone using a building material which is binder-free and consists substantially of sand with a grain size of 0-8 mm and fibrous substances, wherein the building material is introduced as the top layer (6b) into the joints (6) between the paving stones (1, 2).

6. Method according to Claim 5, **characterised in that** a lower layer (6a) of sand is introduced into the joints (6) below the top layer (6b).

7. Method according to Claim 6, **characterised in that** the top layer (6b) is of a thickness (7) of 2-4 cm.

8. Method according to any one of Claims 5 to 7, **characterised in that** the building material has a proportion of sand of 85-99.5 wt.%, preferably 94-96.5 wt.%, and a proportion of fibrous substances of 0.5-15 wt.%, preferably 3.5-6 wt.%.

9. Method according to Claim 8, **characterised in that** the fibrous substances are selected from the following:
a) fibrous material of the vegetable type with fillers, in particular obtained from waste paper recycling;
b) cellulosic wood pulp;
c) pulp of the vegetable type;
d) synthetic fibres;
e) board raw material;
f) paper raw material.

## Revendications

1. Pavage à l'aide de pavés (1, 2) en pierre naturelle ou artificielle, les joints (6) étant remplis d'un matériau de construction, lequel est exempt de liant et consiste pour l'essentiel en sable ayant une granulométrie de 0-8 mm et de fibres, et le matériau de construction formant une couche supérieure (6b) entre les pavés (1, 2).

2. Pavage selon la revendication 1, **caractérisé en ce qu'**au-dessous de la couche supérieure (6b) est incorporée une couche inférieure (6a) en sable, et **en ce que** la couche supérieure (6b) présente une épaisseur de 2-4 cm.

3. Pavage selon la revendication 1 ou 2,
**caractérisé en ce que** le matériau de construction présente une proportion de sable de 85-99,5 % en poids, de préférence 94-96,5 % en poids, et une proportion de matières fibreuses de 0,5-15 % en poids, de préférence 3,5-6 % en poids.

4. Pavage selon la revendication 3, **caractérisé en ce que** les matières fibreuses sont choisies à partir des matières suivantes :
a) matière fibreuse de nature végétale avec des matières de charge, en particulier obtenues à partir du recyclage de vieux papiers ;
b) cellulose-pâte de râperie mécanique ;
c) matière fibreuse de nature végétale ;
d) fibre synthétique ;
e) matériau tubulaire en carton ;
f) matériau tubulaire en papier.

5. Procédé pour le remplissage de joints (6) d'un pavage non-lié avec des pavés (1, 2) en pierre naturelle ou artificielle, en utilisant un matériau de construction qui est exempt de liant et qui, pour l'essentiel, est constitué de sable ayant une granulométrie de 0-8 mm et des matières fibreuses, le matériau de construction étant incorporé en tant que couche supérieure (6b) dans les joints (6) entre les pavés (1, 2).

6. Procédé selon la revendication 5, **caractérisé en ce que**, dans les joints (6), est incorporée une couche inférieure (6a) en sable au-dessous de la couche supérieure (6b).

7. Procédé selon la revendication 6, **caractérisé en ce que** la couche supérieure (6b) présente une épaisseur (7) de 2-4 cm.

8. Procédé selon l'une des revendications 5 à 7, **caractérisé en ce que** le matériau de construction présente une proportion de sable de 85-99,5 % en poids, de préférence 94-96,5 % en poids, et une proportion en matières fibreuses de 0,5-15 % en poids, de préférence 3,5-6 % en poids.

9. Procédé selon la revendication 8, **caractérisé en ce que** les matières fibreuses sont choisies à partir des matières suivantes :
a) matière fibreuse de nature végétale avec des matières de charge, en particulier récupérées à partir du recyclage de vieux papiers ;
b) cellulose-pâte de râperie mécanique ;
c) matière cellulaire de nature végétale ;
d) fibre synthétique ;
e) matériau tubulaire en carton ;
f) matériau tubulaire en papier.
